# EUROPÄISCHE PATENTSCHRIFT

(11) **EP 0 673 902 B1**
(45) Veröffentlichungstag und Bekanntmachung des Hinweises auf die Patenterteilung: **07.01.1998**
(21) Anmeldenummer: 95101201.2
(22) Anmeldetag: 30.01.1995
(51) Int. Cl.: C05F 9/00, C05F 17/00

(54) **Mittel zur Behandlung von Bioabfällen**
Product for treating organic wastes
Produit pour le traitement des déchets organiques

(30) Priorität: 16.02.1994 DE 4404895
(43) Veröffentlichungstag der Anmeldung: 27.09.1995
(73) Patentinhaber: MELITTA HAUSHALTSPRODUKTE GmbH & Co. Kommanditgesellschaft, D-32427 Minden (DE)
(72) Erfinder: Wittenschläger, Lutz, Dr., D-32479 Hille (DE); Scheepe-Leberkühne, Melanie, Dr., D-38108 Braunschweig (DE); Scheepe, Rolf, Dipl.-Ing., D-38110 Braunschweig (DE)
(74) Vertreter: Loesenbeck, Karl-Otto, Dipl.-Ing.

(56) Entgegenhaltungen:
- EP-A- 0 573 303
- DATABASE WPI Section Ch, Week 8248 Derwent Publications Ltd., London, GB; Class A97, AN 82-03102J & JP-A-57 170 888 ( SUMITOMO CHEMICAL KK) , 21.Oktober 1982
- DATABASE WPI Section Ch, Week 9437 Derwent Publications Ltd., London, GB; Class A97, AN 94-294893 & CA-A-2 114 977 ( OIL-DRI CORP AMERICA) , 6.August 1994 & US-A-5 359 961

## Beschreibung

Die Erfindung betrifft ein Mittel zur Behandlung von Bioabfällen. Die seit einigen Jahren befürwortete getrennte Müllsammlung führt dazu, daß in zunehmendem Maße organische Abfälle, kurz Bioabfall genannt, zunächst im Haushalt und dann in dafür vorgesehenen Sammelbehältern gesondert gesammelt und gelagert werden. Insbesondere in der wärmeren Jahreszeit und in wärmeren Räumen setzt dabei oft die Verrottung sehr schnell ein. An der Zersetzung der organischen Abfälle sind zahlreiche Mikroorganismen beteiligt, denen gegenüber seitens der Gesundheitsbehörden hygienische Bedenken geäußert werden. Eine gesundheitliche Gefährdung kann beispielsweise von pathogenen Keimen wie z. B. Aspergillus fumigatus, der als Erreger tiefer Mykosen und als Allergieauslöser bekannt ist, sowie auch von verschiedenen Species des pathogenen Hefepilzes Candida ausgehen. Abwehrgeschwächten oder allergieanfälligen Personen wird sogar empfohlen, von der Verwendung bzw. Beschickung der Biotonnen oder von Schnellkompostern abzusehen.

Ein weiterer störender Faktor ist die Entstehung unangenehmer Gerüche bei der Verrottung. Dies führt auch zur Anlockung von Siedlungsungeziefer wie Fliegen, Schaben, Ratten und dergleichen, was zur Übertragung von Krankheiten beitragen kann.

Der vorliegenden Erfindung liegt die Aufgabe zugrunde, ein Mittel zur Behandlung von Bioabfällen zu schaffen, das die aufgezeigten gesundheitsgefährdenden und störenden Erscheinungen bei der Sammlung von Biomüll erheblich verringert. Die Erfindung besteht im wesentlichen darin, daß in dem Mittel mindestens ein organischer Gelbildner und Kalk miteinander kombiniert sind. Beide Gemischkomponenten sind wasserbindende Stoffe, die sich bei diesem Einsatz in ihren Wirkungen überraschend ergänzen und unterstützen. Es hat sich gezeigt, daß durch den hiermit erreichten Entzug von Feuchtigkeit dem Wachstum von Mikroorganismen wie Schimmel- und Hefepilzen sowie Bakterien deutlich entgegengewirkt wird. Die mikrobiologischen Zersetzungsprozesse verzögern sich erheblich. In kausalem Zusammenhang damit steht auch eine erhebliche Verringerung der Geruchsbelästigung. Hervorzuheben ist dabei in besonderem Maße, daß die genannten Wirkungen nur temporär eintreten, insbesondere also in der Phase der Sammlung der Bioabfälle im Haushalt, aber auch noch in den für die Haushaltungen bereitgestellten Biotonnen sowie im wesentlichen auch noch während des Transportes in Transportfahrzeugen zu großen Kompostieranlagen. Die eingesetzten Stoffe verlieren andererseits jedoch im Laufe der Zeit auch ihre Wirkung. Darüber hinaus tritt bei der Anhäufung in großen Kompostieranlagen aufgrund der dort vorhandenen sehr großen Biomasse auch noch ein deutlicher Verdünnungseffekt ein. Die dort gewünschte Zersetzung wird dann von diesen Stoffen nicht mehr behindert.

Als organische Gelbildner haben sich vernetzte Polyacrylate, aber auch pflanzliche Gelbildner wie Polysaccharide, Carboxymethylzellulosen und deren Derivate sowie ferner mikrobielle Polysaccharide, wie Xanthan, Furcellaran, Curdlan oder Pullulan als besonders vorteilhaft, da stark wasserbindend, erwiesen. Ein vernetztes Polyacrylat ist ein sogenanntes Superabsorbent mit einer sehr stark wasserbindenden Wirkung. Sie sind zwar synthetischen Ursprungs, sind jedoch chemisch inert und stören in den hier in Frage kommmenden Konzentrationen späterhin den Ablauf der Verrottung in der Kompostieranlage nicht. Werden pflanzliche Gelbildner eingesetzt, handelt es sich um biologisch abbaubare Stoffe. Es kann auch eine Kombination dieser Gelbildner eingesetzt werden.

Der eingesetzte Kalk ist ebenfalls wasserbindend und bewirkt darüber hinaus eine pH-Wert-Verschiebung in den basischen Bereich und bewirkt hierdurch eine weitere Verschlechterung der Lebensbedingungen für Mikroorganismen, Bakterien und dergleichen. Die Gemischkomponenten ergänzen und unterstützen sich in ihren Wirkungen in einem überraschenden Ausmaß, so daß die Einsatzmenge insgesamt so gering gehalten werden kann, daß auch von daher die nur temporäre Wirkungsweise gewährleistet ist. Hervorzuheben ist auch, daß mit dem Feuchtigkeitsentzug ein Strukturverlust der organischen Abfälle vermieden wird, sich also nicht mehr im Bodenbereich der Biotonnen oder der Transportfahrzeuge ein formloser nasser Brei sammelt. Es hat sich dabei auch gezeigt, daß bei Verwendung dieses Mittels im häuslichen Bereich die Bioabfälle in Papiertüten gesammelt werden können, ohne daß die Gefahr der Durchfeuchtung der Papiertüten besteht. Dies ist in besonderem Maße vorteilhaft, da die Abfälle bis zur Kompostieranlage in den Papiertüten verbleiben können, die sich bei der Kompostierung ohne weiteres mit zersetzen. Die mögliche Standzeit der Sammelgefäße für organische Abfälle bis zu deren Abholung kann bei Verwendung des Mittels ebenfalls beträchtlich verlängert werden.

Die eingesetzte Gemischkomponente Kalk behindert aufgrund ihrer Eigenschaften nicht nur nicht die Kompostierung, sondern führt zu einer Anreicherung des fertigen Komposts mit Mineralstoffen und hat von daher späterhin noch bodenverbessernde Wirkung.

Es hat sich in weiterer Ausgestaltung als vorteilhaft erwiesen, den Kalk selbst in kombinierter Form sowohl als gelöschten wie als gebrannten Kalk als Gemischkomponente zu nehmen. Der gebrannte Kalk hat zumindest temporär eine stärkere Wirkung als der gelöschte Kalk. Der gelöschte Kalk verbessert die Handhabbarkeit der Kalkkomponente. Es hat sich ferner als sehr zweckmäßig erwiesen, die Kalkkomponente in Kombination sowohl aus Kalkmehl wie auch als Kalkgrieß zu bilden. Der Mehlbestandteil hat aufgrund seiner größeren Oberfläche die temporär schnellere Wirkung, die Grießkomponente hat im Verhältnis dazu eher eine Langzeitwirkung und verbessert die Handhabbarkeit und führt zu einer gewünschten, strukturverbessernden Granulatbildung. Dem Gelbildner-Kalk-Gemisch werden zweckmäßig weitere Komponenten beigefügt. Als besonders vorteilhaft hat sich der Zusatz mindestens eines Repellents, und zwar hier insbesondere pflanzlicher Produkte oder Extrakte, erwiesen, um das Siedlungsungeziefer zusätzlich fernzuhalten. Derartige pflanzliche Repellents wirken aufgrund ihrer organischen Natur nur temporär und unterliegen danach ebenfalls dem biologischen Abbau.

Dem Gemisch können ferner wahlweise Duftstoffe zur Geruchsverbesserung im Haushalt sowie auch Spurenelemente, die die spätere Kompostierung positiv unterstützen können, beigefügt werden. Es hat sich dabei gezeigt, daß bei der deutlichen Verzögerung der Zersetzung des Bioabfalles in der gewünschten Zeitphase derartige zugesetzte Spurenelemente noch nicht wirksam werden, also die gewünschte temporäre Wirkung des Mittels nicht beeinträchtigen.

Beispiele für Mittel gemäß der Erfindung werden nachfolgend im einzelnen näher beschrieben.

Ein Gemisch, das die aufgezeigten gesundheitsgefährdenden und geruchsbelästigenden sowie Ungeziefer anziehenden Wirkungen von Bioabfall in der gewünschten temporären Begrenzung ohne jede Beeinträchtigung der späteren Kompostierung signifikant verringert hat, hatte folgende Zusammensetzung:

Vernetztes Polyacrylat als organischer Gelbildner mit einem Anteil von 20 Gewichtsprozent. Quassia lignum und Pyrethrum flores als pflanzliche Repellents mit einem Anteil von je 10 Gewichtsprozent. Quassia lignum ist auch als Bitterholz oder Fliegenholz bekannt und wird zur Insektenbekämpfung eingesetzt. Pyrethrum flores ist ebenfalls ein Insektenvertilgungsmittel, das besonders zur Bekämpfung von Krankheiten verursachenden Schädlingen in der Lebensmittelindustrie, im Getreidehandel, aber auch in der Plantagenwirtschaft eingesetzt wird. Vorzüge sind die Ungiftigkeit für Warmblütler und eine schnelle Wirksamkeit.

Die Kalkkomponente des Gemisches besteht aus 36,2 Gewichtsprozent Kalksteinmehl, 10 000 MF von gelöschtem Kalk sowie 23,8 Gewichtsprozent Kalksteingrieß II von gelöschtem Kalk. Die pH-Wert-Verschiebung in den basischen Bereich geht in die Größenordnung von 9.

Es hat sich gezeigt, daß die Anwendungsmenge von einem Eßlöffel eines derartigen Gemisches auf den Boden eines handelsüblichen Papiermüllbeutels ausreicht, um während der Sammelphase im Haushalt die Zersetzung des Bioabfalles weitestgehend zu verhindern, unangenehme Gerüche sowie eine Durchfeuchtung des Papiermüllbeutels zu vermeiden.

Es hat sich gezeigt, daß die Wirkung auch noch bei der späteren zeitweiligen Lagerung in der Biotonne bis zu deren Leerung anhält.

Das erfindungsgemäße Mittel eignet sich nicht nur zur Behandlung des Biomülls im Haushaltsbereich, sondern auch für die Behandlung des Bioabfalls im gewerblichen Bereich. Je nach Einsatzzweck und Art des Bioabfalles können die Gewichtsprozentanteile variiert werden. Der mögliche Gewichtsprozentbereich für die organischen Gelbildner liegt zwischen 5 und 50 %.
Die mögliche Spannbreite für die Kalkkomponente liegt im Bereich von 10 - 70 %. Die Repellents können in einer Spannbreite von 5 - 20 Gewichtsprozent variieren. Das jeweilige Gemisch ergänzt sich naturgemäß jeweils zu 100 %.

Bei dem eingangs genannten Ausführungsbeispiel kann die organische Gelbildnerkomponente dadurch variiert werden, daß entweder statt oder in Kombination mit den vernetzten Polyacrylaten pflanzliche Gelbildner wie Polysaccharide und/oder Carboxymethylzellulosen und deren Derivate oder mikrobielle Polysaccharide wie Xanthan, Furcellaran, Curdlan oder Pullulan eingesetzt werden. Dem Gemisch können ferner Duftstoffe wie beispielsweise Lavendel zugesetzt werden, sowie ferner Spurenelemente, die die spätere Kompostierung positiv unterstützen.

Als weiterer wasserbindender Stoff hat sich der Zusatz von Sägespänen oder Sägemehl als zweckmäßig erwiesen, zumal ein derartiger Zusatz die spätere Kompostierung begünstigt und dem fertigen Kompost bodenverbessernde Eigenschaften gibt.

## Patentansprüche

1. Mittel zur Behandlung von Bioabfällen, **gekennzeichnet durch** die Kombination mindestens eines organischen Gelbildners und Kalk.

2. Mittel nach Anspruch 1, gekennzeichnet durch den Zusatz mindestens eines Repellents.

3. Mittel nach einem der vorhergehenden Ansprüche, dadurch gekennzeichnet, daß der oder die organischen Gelbildner im Gemisch einen Anteil von 5 - 50 Gewichtsprozent haben.

4. Mittel nach einem der vorhergehenden Ansprüche, dadurch gekennzeichnet, daß die Kalkkomponente im Gemisch einen Gewichtsanteil von 10 - 70 Gewichtsprozent hat.

5. Mittel nach einem der vorhergehenden Ansprüche, dadurch gekennzeichnet, daß der Repellentsanteil im Gemisch zwischen 5 und 20 Gewichtsprozent liegt.

6. Mittel nach einem der vorhergehenden Ansprüche, dadurch gekennzeichnet, daß als Gelbildner vernetzte Polyacrylate vorgesehen sind.

7. Mittel nach einem der Ansprüche 1 - 5, dadurch gekennzeichnet, daß Gelbildner von pflanzlicher Herkunft vorgesehen sind.

8. Mittel nach Anspruch 7, dadurch gekennzeichnet, daß als Gelbildner Polysaccharide und/oder Carboxymethylzellulosen und deren Derivate vorgesehen sind.

9. Mittel nach einem der Ansprüche 1-5, dadurch gekennzeichnet, daß als Gelbildner Polysaccharide mikrobieller Herkunft vorgesehen sind.

10. Mittel nach einem oder mehreren der vorhergehenden Ansprüche, dadurch gekennzeichnet, daß die Kalkkomponente des Gemisches sowohl aus gelöschtem wie aus gebranntem Kalk gebildet ist.

11. Mittel nach einem oder mehreren der vorhergehenden Ansprüche, dadurch gekennzeichnet, daß die Kalkkomponente des Gemisches in Kombination sowohl aus Kalkmehl wie auch aus Kalkgrieß gebildet ist.

12. Mittel nach einem oder mehreren der vorhergehenden Ansprüche, dadurch gekennzeichnet, daß in dem Gemisch als Repellents Quassia lignum und Pyrethrum flores vorgesehen sind.

13. Mittel nach einem oder mehreren der vorhergehenden Ansprüche, gekennzeichnet durch einen Zusatz von Sägespänen oder Sägemehl als weiterem wasserbindenden Bestandteil.

14. Mittel nach einem oder mehreren der vorhergehenden Ansprüche, gekennzeichnet durch einen Zusatz von Duftstoffen.

15. Mittel nach einem oder mehreren der vorhergehenden Ansprüche, gekennzeichnet durch einen Zusatz von die spätere Kompostierung unterstützenden Spurenelementen.

## Claims

1. Agent for the treatment of biowastes characterised by the combination of at least one organic gel-forming agent and lime.

2. Agent according to claim 1 characterized by the addition of at least one repellent.

3. Agent according to one of the preceding claims characterised in that the organic gel-forming agent or agents are a proportion in the mixture of 5 - 50% by weight.

4. Agent according to one of the preceding claims characterised in that the lime component in the mixture is a proportion by weight of 10 - 70% by weight.

5. Agent according to one of the preceding claims characterised in that the repellent proportion in the mixture is between 5 and 20% by weight.

6. Agent according to one of the preceding claims characterised in that cross-linked polyacrylates are provided as the gel-forming agent.

7. Agent according to one of claims 1 to 5 characterised in that gel-forming agents of vegetable origin are used.

8. Agent according to claim 7 characterised in that polysaccharides and/or carboxymethylcelluloses and derivatives thereof are provided as gel-forming agents.

9. Agent according to one of claims 1 to 5 characterised in that polysaccharides of microbial origin are provided as gel-forming agents.

10. Agent according to one or more of the preceding claims characterised in that the lime component of the mixture is formed both from slaked lime and quicklime.

11. Agent according to one or more of the preceding claims characterized in that the lime component of the mixture is formed in combination both from lime powder and also lime grit.

12. Agent according to one or more of the preceding claims characterised in that Quassia lignum and Pyrethrum flores are provided as repellents in the mixture.

13. Agent according to one or more of the preceding claims characterised by an addition of sawmill waste or sawdust as a further water-binding constituent.

14. Agent according to one or more of the preceding claims characterised by an addition of perfumes.

15. Agent according to one or more of the preceding claims characterised by an addition of trace elements which promote later composting.

## Revendications

1. Produit de traitement de déchets organiques,
caractérisé par
la combinaison d'au moins un gélifiant et de chaux.

2. Produit selon la revendication 1,
caractérisé par
l'addition d'au moins un répulseur.

3. Produit selon l'une des revendications précédentes,
caractérisé en ce que
le ou les gélifiants organiques représentent une teneur de 5-50 % en poids dans le mélange.

4. Produit selon l'une des revendication précédentes,
caractérisé en ce que
le composant de chaux dans le mélange a une teneur en poids de 10-70 %.

5. Produit selon l'une des revendication précédentes,
caractérisé en ce que
la teneur en répulseur dans le mélange est comprise entre 5 et 20 % en poids.

6. Produit selon l'une des revendication précédentes,
caractérisé en ce qu'
on utilise comme gélifiant des polyacrylates réticulés.

7. Produit selon l'une des revendication 1 à 5,
caractérisé en ce qu'
on prévoit des gélifiants d'origine végétale.

8. Produit selon la revendication 7,
caractérisé en ce qu'
on prévoit comme gélifiants des polysaccharides et/ou des carboxyméthylcelluloses et leurs dérivés.

9. Produit selon l'une des revendications 1 à 5,
caractérisé en ce qu'
on prévoit comme gélifiants des polysaccharides d'origine microbienne.

10. Produit selon l'une ou plusieurs des revendications précédentes,
caractérisé en ce que
le composant de chaux du mélange est constitué aussi bien de chaux éteinte que de chaux vive.

11. Produit selon l'une ou plusieurs des revendications précédentes,
caractérisé en ce que
le composant de chaux du mélange est constitué en combinaison aussi bien de poudre de chaux que de granulés de chaux.

12. Produit selon l'une ou plusieurs des revendications précédentes,
caractérisé en ce qu'
on prévoit dans le mélange comme répulseur quassa lignum et Pyrethrum flores.

13. Produit selon l'une ou plusieurs des revendications précédente,
caractérisé par
l'addition de copeaux de bois ou de sciure de bois comme autre composant de fixation d'eau.

14. Produit selon l'une ou plusieurs des revendications précédentes,
caractérisé par l'addition de parfums.

15. Produit selon l'une ou plusieurs des revendications précédentes,
caractérisé par
l'addition d'éléments de trace qui facilitent le compostage ultérieur.
